# EUROPEAN PATENT APPLICATION

(11) **EP 4 745 645 A1**
(43) Date of publication of application: **20.05.2026**
(21) Application number: 23945115.6
(22) Date of filing: 12.07.2023
(51) Int. Cl.: G02B 6/46, H02G 1/06, H02G 9/06

(54) **INFORMATION MANAGEMENT SYSTEM AND INFORMATION MANAGEMENT METHOD**

(71) Applicant: Sumitomo Electric Industries, Ltd., Osaka-shi, Osaka 541-0041 (JP)
(72) Inventor: SATO Fumiaki, Osaka-shi, Osaka 541-0041 (JP); SHIMODA Yuuki, Osaka-shi, Osaka 541-0041 (JP)
(74) Representative: Müller-Boré & Partner Patentanwälte PartG mbB
(86) International application number: PCT/JP2023/025724
(87) International publication number: WO 2025/013240

(57) **Abstract**

The present invention provides an information management system for calculating the length of a duct in which a cable is laid, wherein a first code is given to a first end of the duct in the longitudinal direction thereof, and first position information indicating the position of the first end is stored in the first code. The information management system comprises: an acquisition unit that acquires the first position information after the duct has been laid; and a calculation unit that calculates the length of the laid duct on the basis of the first position information.

## Description

### TECHNICAL FIELD

The present disclosure relates to an information management system and an information management method.

### BACKGROUND ART

In the related art, a technique for facilitating a cable installing work has been developed. For example, Patent Literature 1 discloses a method of providing, on or near an installed optical cable, a recording unit that encodes and records installation-related information on the optical cable, and recording and reading out the installation-related information on the optical cable at a site where the optical cable has been installed.

### CITATION LIST

### PATENT LITERATURE

Patent Literature 1: JP2001-21730A

### SUMMARY OF INVENTION

An information management system according to the present disclosure is
an information management system configured to calculate a length of a duct in which a cable is to be installed, includes:
an acquisition unit configured to acquire first position information after the duct is installed; and
a calculation unit configured to calculate the length of the installed duct based on the first position information,
wherein a first code is attached to a first end in a longitudinal direction of the duct, and
wherein the first position information indicates a position of the first end, and the first code stores the first position information.

An information management method according to the present disclosure is
an information management method for calculating a length of a duct in which a cable is to be installed, the information management method including:
attaching a first code to a first end in a longitudinal direction of the duct, the first code storing first position information indicating a position of the first end;
acquiring the first position information after the duct is installed; and
calculating the length of the installed duct based on the first position information.

### BRIEF DESCRIPTION OF DRAWINGS

[FIG. 1] FIG. 1 is a perspective view illustrating an example of a cable, a sub-duct, and a main duct for which an information management system according to an embodiment of the present disclosure is used.
[FIG. 2] FIG. 2 is a diagram illustrating an example of a state in which a connector is attached to an end portion of the cable illustrated in FIG. 1.
[FIG. 3] FIG. 3 is a block diagram illustrating a configuration of the information management system according to the embodiment of the present disclosure.
[FIG. 4] FIG. 4 is a diagram illustrating an example of a method of reading position information stored in a code illustrated in FIG. 1.
[FIG. 5] FIG. 5 is a sequence diagram for illustrating a flow of an operation of the information management system illustrated in FIG. 3.

### DESCRIPTION OF EMBODIMENTS

### Technical Problem

When determining a length of a cable to be installed, a worker refers to, for example, a route on a map of a duct in which the cable is to be installed. However, there is a possibility that a deviation occurs between the length of the cable determined based on the route on the map and a length of the duct in which the cable is actually to be installed, which could result in the cable to be installed not being long enough or, conversely, having excess length. Therefore, a technique that can more accurately acquire the length of the duct in which the cable is actually to be installed is desired.

An object of the present disclosure is to provide an information management system and an information management method, which can more accurately acquire a recommended length of a cable to be installed in a duct.

### Advantageous Effects of Present Disclosure

According to the present disclosure, it is possible to more accurately acquire a recommended length of a cable to be installed in a duct.

### Description of Embodiment of Present Disclosure

First, an embodiment of the present disclosure will be listed and described.

An information management system according to an embodiment of the present disclosure is
(1) an information management system configured to calculate a length of a duct in which a cable is to be installed, includes:
   an acquisition unit configured to acquire first position information after the duct is installed; and
   a calculation unit configured to calculate the length of the installed duct based on the first position information,
   wherein a first code is attached to a first end in a longitudinal direction of the duct, and
   wherein the first position information indicates a position of the first end, and the first code stores the first position information.

In this way, by the configuration of acquiring the position information on the end portion of the installed duct, the length of the installed duct can be easily calculated. In addition, by obtaining the length of the installed duct, for example, a recommended length of the cable to be installed inside the duct can be more accurately acquired by a worker.

(2) The information management system according to the above-described (1),
in which a second code may be attached to a second end, the second end is an end opposite to the first end in the longitudinal direction of the duct,
in which second position information indicates a position of the second end, and the second code stores the second position information.
in which the acquisition unit may acquire the first position information and the second position information after the duct is installed, and
in which the calculation unit may calculate the length of the installed duct based on the first position information and the second position information.

With such a configuration, it is not necessary to check the position of the end portion of the duct in advance, and it is possible to easily acquire the position information of both ends of the installed duct.

(3) The information management system according to the above-described (1) and (2), in which
the calculation unit may further calculate a recommended length of the cable to be installed inside the duct based on the calculated length of the duct.

In this way, with a configuration in which the recommended length of the cable to be installed is automatically calculated, it is possible to reduce the burden on the worker in obtaining the recommended length of the cable.

(4) The information management system according to any one of the above-described (1) to (3), in which
a connector may be attached to an end portion of the cable to be installed in the duct before the cable is installed in the duct.

Here, in the cable in which the connector is attached to the end portion before installing, when there is a deviation between the length of the cable and the length of the duct, it is difficult to correct the deviation. Therefore, as described above, a configuration of calculating the length of the installed duct in which the cable is to be installed is particularly effective when the connector is attached to the end portion of the cable.

(5) The information management system according to any one of the above-described (1) to (4), in which
the first code may further store diameter information indicating a diameter of the duct, and
the calculation unit may further calculate a recommended diameter of the cable to be installed inside the duct based on the diameter information.

With such a configuration, the worker can prepare a more appropriate cable as the cable to be installed inside the duct.

An information management method according to the embodiment of the present disclosure is
(6) an information management method for calculating a length of a duct in which a cable is to be installed, the information management method including:
attaching a first code to a first end in a longitudinal direction of the duct, the first code storing first position information indicating a position of the first end;
acquiring the first position information after the duct is installed; and
calculating the length of the installed duct based on the first position information.

In this way, by the method of acquiring the position information on the end portion of the installed duct, the length of the installed duct can be easily calculated. In addition, by obtaining the length of the installed duct, for example, the recommended length of the cable to be installed inside the duct can be more accurately acquired by the worker.

### Details of Embodiment of Present Disclosure

A specific example of an information management system according to the present disclosure will be described below with reference to the drawings. The present disclosure is not limited to these examples, but is defined by the scope of the claims, and is intended to include all modifications within the meaning and scope equivalent to the scope of the claims.

### Configurations of Cable, Sub-Duct, and Main Duct

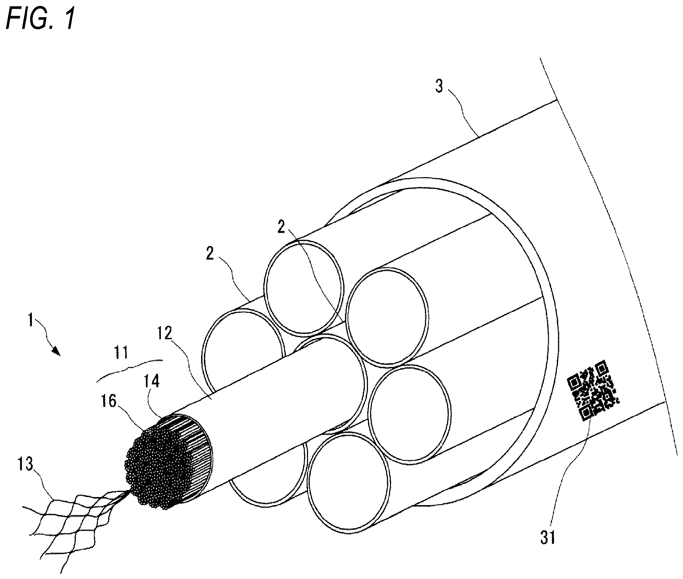

FIG. 1 is a perspective view illustrating an example of a cable 1, a sub-duct 2, and a main duct 3 for which an information management system 100 according to an embodiment of the present disclosure is used. As illustrated in FIG. 1, the sub-duct 2 is installed inside the main duct 3, and the cable 1 is installed inside the sub-duct 2. In FIG. 1, one cable 1 is installed inside one sub-duct 2, but a plurality of cables 1 may be installed inside one sub-duct 2.

The cable 1 is a micro-duct cable that is to be installed inside the sub-duct 2 by, for example, air blowing or traction, and has an outer diameter of approximately 20 mm. The cable 1 is, for example, an optical fiber cable and includes a cable core 11 and a sheath 12 formed around the cable core 11.

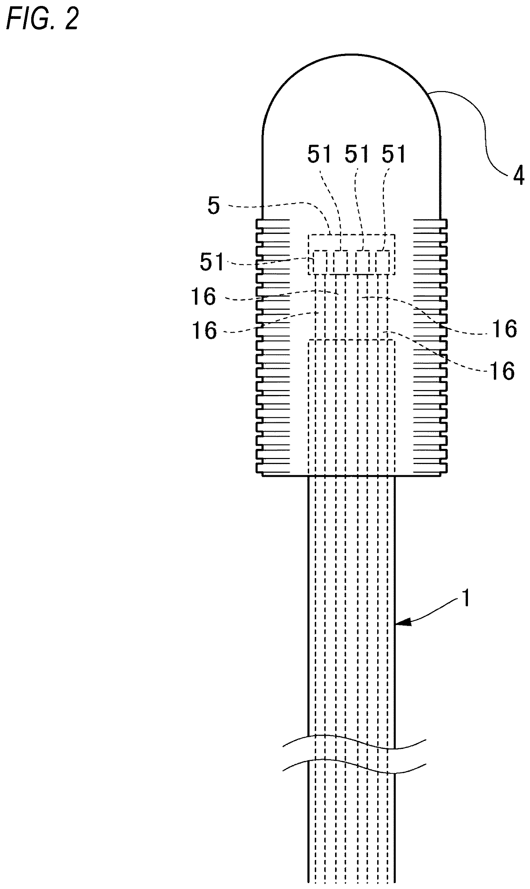

FIG. 2 is a diagram illustrating an example of a state in which a connector 5 is attached to an end portion of the cable 1 illustrated in FIG. 1. As illustrated in FIG. 2, the connector 5 is attached to the end portion of the cable 1 before the cable 1 is installed inside the sub-duct 2. The connector 5 is, for example, a multi-core connector and includes a plurality of ferrules 51. Each ferrule 51 is connected to an end portion of an optical fiber 13 (see FIG. 1) in an optical fiber ribbon 16. A protective tube 4 is provided at the end portion of the cable 1, and the connector 5 is accommodated inside the protective tube 4.

Referring again to FIG. 1, the cable core 11 includes optical fiber ribbons 16 each including a plurality of optical fibers 13, and an overwrapping tape 14 that covers a periphery of the plurality of optical fiber ribbons 16. As for the optical fibers 13 forming the optical fiber ribbon 16, for example, the optical fibers 13 adjacent to each other may be intermittently coupled along a longitudinal direction of the cable 1. The cable 1 illustrated in FIG. 1 is a slot-less type, but may also be a slot type.

The overwrapping tape 14 is longitudinally wrapped or helically wrapped around the plurality of optical fiber ribbons 16. The sheath 12 is made of a resin such as high-density polyethylene (HDPE), and is formed by extrusion molding around the overwrapping tape 14. In addition, the sheath 12 is preferably made of a material in which an additive amount of silicone is in a range of 0.1% by mass to 0.5% by mass. In this case, when installing the cable 1 inside the sub-duct 2, the sheath 12 can be made to slip easily in a state in which the sheaths 12 are in contact with each other or the sheath 12 and the sub-duct 2 are in contact with each other, so that the cable 1 can be easily installed.

A code 31 is attached to the main duct 3. In an example illustrated in FIG. 1, a QR code (registered trademark) that can record a large amount of information such as letters and numbers and enable high-speed reading by combining white cells and black cells is attached as the code 31.

The code 31 stores position information of a portion where the code 31 is attached. For example, the position information indicates a distance from a reference point in the main duct 3. Further, the code 31 may store at least one of installation-related information on the main duct 3 such as an inner diameter, an entire length, a bending angle, and an inclination.

The code 31 may be printed using an inkjet printer or the like, or may be laser engraved. In addition, instead of printing or engraving the code 31 directly on the main duct 3, paper on which the code 31 is printed, an IC chip, or the like may be attached to the main duct 3. The code 31 may have a color different from a color of the main duct 3. Accordingly, the position where the code 31 is attached can be easily checked.

The code 31 is not limited to being attached to the main duct 3, and may also be attached to the sub-duct 2. When the code 31 is attached to the sub-duct 2, position information indicating a distance from a reference point in the sub-duct 2 is stored in the code 31.

### Configuration of Information Management System

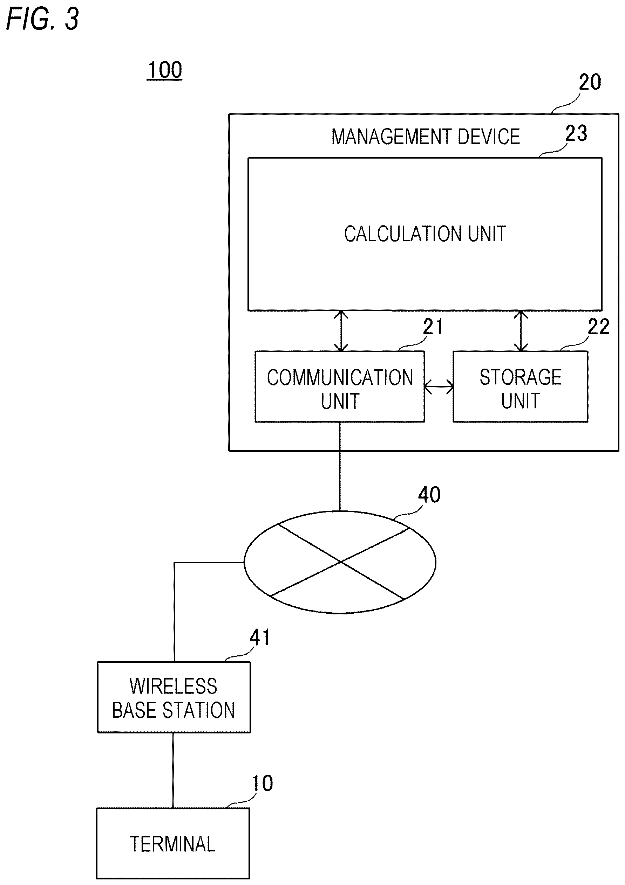

FIG. 3 is a block diagram illustrating a configuration of the information management system 100 according to the embodiment of the present disclosure. Referring to FIG. 3, the information management system 100 includes a terminal (acquisition unit) 10 and a management device 20. The terminal 10 and the management device 20 are communicatively connected via an external network 40 such as the Internet and a wireless base station 41. The terminal 10 is, for example, a smartphone used by a worker who installs the cable 1, and has an imaging function and a display function.

### Acquisition of Position Information

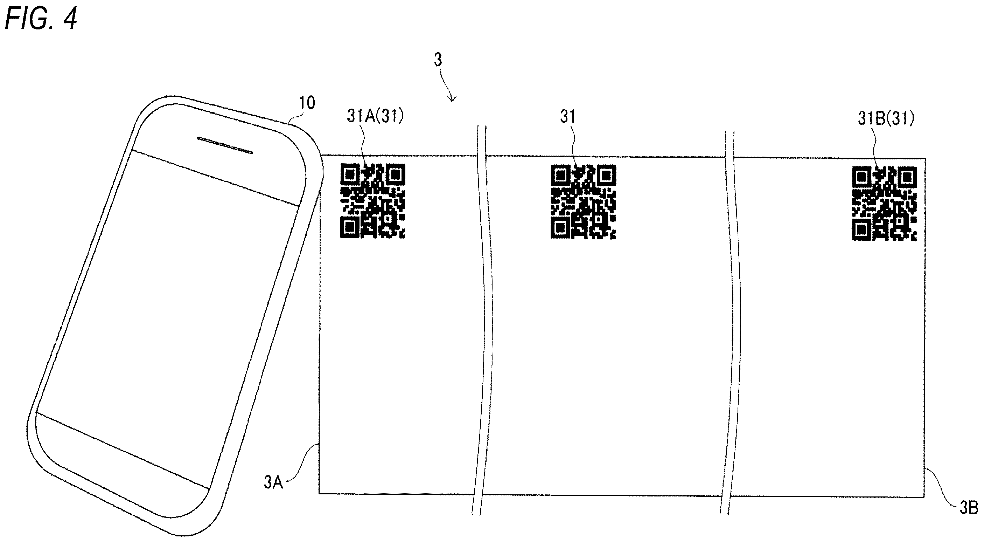

FIG. 4 is a diagram illustrating an example of a method of reading the position information stored in the code 31 illustrated in FIG. 1. As illustrated in FIG. 4, the codes 31 are attached to the main duct 3 at a plurality of positions at predetermined intervals along a longitudinal direction of the main duct 3. The predetermined interval is, for example, in a range of 30 cm to 1 m.

For example, the worker uses the terminal 10 to capture an image of the code 31 (hereinafter, referred to as a "first code 31A") attached to a first end 3A in the longitudinal direction of the installed main duct 3. Accordingly, the terminal 10 acquires first position information that is position information of the first end 3A. The first end 3A of the main duct 3 also includes the vicinity of the first end 3A.

Further, the worker uses the terminal 10 to capture an image of the code 31 (hereinafter, referred to as a "second code 31B") attached to a second end 3B opposite the first end 3A in the longitudinal direction of the installed main duct 3. Accordingly, the terminal 10 acquires second position information that is position information of the second end 3B. Then, the terminal 10 transmits the acquired first position information and second position information to the management device 20 via the wireless base station 41 and the external network 40 illustrated in FIG. 3. The second end 3B of the main duct 3 also includes the vicinity of the second end 3B.

### Calculation of Duct Length and Cable Length

Referring again to FIG. 3, the management device 20 includes a communication unit 21, a storage unit 22, and a calculation unit 23. The communication unit 21 receives the first position information and the second position information transmitted from the terminal 10, and outputs the first position information and the second position information to the calculation unit 23. The calculation unit 23 calculates a length of the installed main duct 3 (hereinafter, referred to as "installed duct length") based on the first position information and the second position information.

In addition, the calculation unit 23 calculates a recommended length of the cable 1 (hereinafter, referred to as a "recommended cable length") installed inside the main duct 3 based on the calculated installed duct length. More specifically, for example, the storage unit 22 stores a calculation formula indicating a correspondence between the installed duct length and the recommended cable length. The calculation unit 23 uses the calculation formula to calculate, for example, a value obtained by adding a predetermined value to the installed duct length as the recommended cable length. Then, the calculation unit 23 outputs duct length information indicating the calculated installed duct length and cable length information indicating the recommended cable length to the communication unit 21.

Upon receiving the duct length information and the cable length information from the calculation unit 23, the communication unit 21 transmits the duct length information and the cable length information to the terminal 10 via the external network 40 and the wireless base station 41. Upon receiving the duct length information and the cable length information transmitted from the management device 20, the terminal 10 displays, on a screen of the terminal 10, the installed duct length indicated by the duct length information and the recommended cable length indicated by the cable length information.

When the installation-related information as described above is stored in the code 31, the terminal 10 may acquire the installation-related information on the main duct 3 in addition to the position information on the portion where the code 31 is attached by capturing an image of the code 31, and transmit the portion information and the installation-related information to the management device 20. Upon receiving the position information and the installation-related information transmitted from the terminal 10, the communication unit 21 of the management device 20 outputs the position information and the installation-related information to the calculation unit 23.

In this case, the calculation unit 23 may calculate the installed duct length and the recommended cable length based on the position information from the terminal 10, and may further adjust the recommended cable length according to an inclination angle or the like of the main duct 3 included in the installation-related information from the terminal 10. Accordingly, a more accurate recommended cable length can be acquired.

It is assumed that the installation-related information stored in the code 31 includes a total length of the main duct 3. In this case, the calculation unit 23 of the management device 20 may determine the installed duct length based on, for example, the position information and the information on the total length of the main duct 3 included in the installation-related information, and calculate the recommended cable length based on the installed duct length.

Further, it is assumed that diameter information indicating the inner diameter of the main duct 3 is stored in the code 31 as installation-related information. In this case, the calculation unit 23 of the management device 20 may calculate a recommended inner diameter of the cable 1 installed in the main duct 3 based on the diameter information transmitted from the terminal 10 in addition to the recommended cable length.

The position information stored in the code 31 is not limited to the distance from the reference point of the main duct 3, that is, a numerical value itself, and may be identification information corresponding to the distance. The identification information may be a letter, a sign, a symbol, or the like corresponding to the distance from the reference point. Similarly, when the installation-related information is stored in the code 31, not only values of various parameters related to the installation of the main duct 3 but also identification information corresponding to these values, that is, a letter, a sign or a symbol, may be stored in the code 31.

For example, it is assumed that in the storage unit 22 of the management device 20, a first correspondence table indicating a correspondence between the distance from the reference point of the main duct 3 and the identification information. When the identification information is received instead of the first position information or the second position information, the calculation unit 23 of the management device 20 can acquire the distance corresponding to the identification information with reference to, for example, the first correspondence table.

In addition, it is assumed that the storage unit 22 stores a second correspondence table indicating a correspondence between various values included in the installation-related information of the main duct 3 and the identification information. When the identification information is received as the installation-related information, the calculation unit 23 can acquire various values corresponding to the identification information with reference to, for example, the second correspondence table.

In addition, when the first end 3A or the second end 3B of the installed main duct 3 is a reference point, a distance from the reference point to the first end 3A or a distance from the reference point to the second end 3B may be known. In such a case, the worker may use the terminal 10 to capture an image of only the code 31 attached to the end portion other than the end portion whose distance from the reference point is known. After reading one piece of position information stored in the code 31, the terminal 10 transmits the position information to the management device 20 when, for example, an operation performed by the worker to instruct transmission of the position information is received.

When the management device 20 receives the one piece of position information from the terminal 10, the management device 20 calculates the installed duct length based on the position information. For example, the calculation unit 23 of the management device 20 calculates, as the installed duct length, the distance from the reference point indicated by the position information.

### Flow of Operation

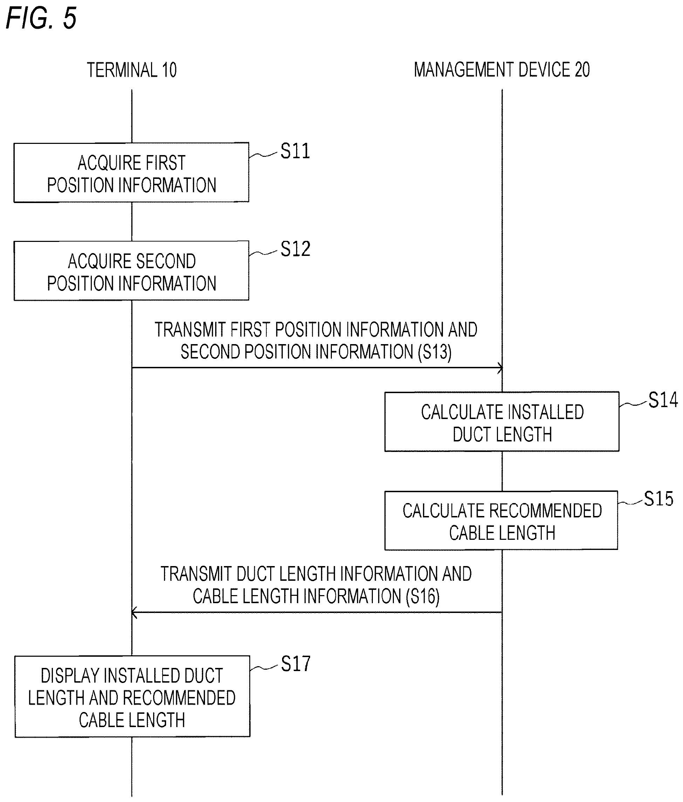

Next, a flow of an operation of the information management system according to the embodiment of the present disclosure will be described. FIG. 5 is a sequence diagram for illustrating the flow of the operation of the information management system illustrated in FIG. 3. Referring to FIG. 5, first, the worker who installs the cable 1 uses the terminal 10 to capture an image of the first code 31A attached to the first end 3A of the main duct 3 after the main duct 3 is installed. Accordingly, the terminal 10 acquires the first position information stored in the first code 31A (step S11).

Next, the worker uses the terminal 10 to capture an image of the second code 31B attached to the second end 3B of the main duct 3. Accordingly, the terminal 10 acquires, for example, the second position information stored in the second code 31B (step S12).

Next, it is assumed that the worker performs an operation of instructing the terminal 10 to transmit the first position information and the second position information. In this case, the terminal 10 transmits the first position information and the second position information to the management device 20 (step S13).

Next, upon receiving the first position information and the second position information transmitted from the terminal 10, the management device 20 calculates the installed duct length, which is the length of the installed main duct 3, based on the first position information and the second position information (step S14).

Next, the management device 20 calculates the recommended cable length of the cable 1 installed inside the main duct 3 based on the calculated installed duct length (step S15). Next, the management device 20 transmits the duct length information indicating the installed duct length and the cable length information indicating the recommended cable length to the terminal 10 (step S16).

Then, upon receiving the duct length information and the cable length information transmitted from the management device 20, the terminal 10 displays, on a screen of the terminal 10, the installed duct length indicated by the duct length information and the recommended cable length indicated by the cable length information (step S17).

In this way, by a configuration of acquiring position information on an end portion of the installed main duct 3, the length of the installed main duct 3 can be easily calculated. In addition, since the recommended length of the cable 1 installed inside the main duct 3 is automatically calculated based on the length of the installed main duct 3, it is possible to acquire the recommended length of the cable 1 without requiring much time and effort for the worker.

Here, in the cable 1 in which a connector is attached to the end portion before installing, when there is a deviation between the length of the cable 1 and the length of the main duct 3, it is difficult to correct the deviation. On the other hand, in the information management system 100 according to the embodiment of the present disclosure, since the recommended cable length of the cable 1 can be acquired before installing the cable 1 as described above, for example, the length of the cable 1 can be adjusted to the recommended cable length before the connector is attached to the end portion of the cable 1.

The terminal 10 is not limited to the smartphone, and may also be an augmented reality (AR) glass or the like. In addition, a two-dimensional code or a one-dimensional code other than the QR code may be attached to the main duct 3 as the code 31.

The terminal 10 illustrated in FIG. 3 may have a function of the calculation unit 23 of the management device 20. For example, an application program installed in the terminal 10 may calculate the installed duct length and the recommended cable length based on the first position information and the second position information.

The calculation unit 23 is not limited to the configuration of calculating both the installed duct length and the recommended cable length, and may be, for example, a configuration of calculating only the installed duct length. In this case, only the installed duct length is displayed on the screen of the terminal 10. The worker can estimate the recommended cable length by checking the installed duct length displayed on the screen.

### Modification

Referring again to FIG. 1, in the information management system 100 according to the embodiment of the present disclosure, a code may be attached not only to the main duct 3 but also to the cable 1. The code includes at least one of a plurality of pieces of installation-related information on the cable 1 such as a manufacturing company, a manufacturing year, a management number, an outer diameter, a mass, a coefficient of friction, a rigidity, a number of optical fibers, an allowable tension, an allowable bending diameter, and an operating temperature.

After the cable 1 is installed, the management device 20 can store installation-related information of the cable 1 in association with the installation-related information of the main duct 3 in which the cable 1 is installed.

More specifically, for example, after the cable 1 is installed, the worker causes the terminal 10 to read both the code 31 attached to the main duct 3 and the code attached to the cable 1. The terminal 10 acquires both the installation-related information stored in the code 31 of the main duct 3 and installation-related information stored in the code of the cable 1, and transmits these pieces of installation-related information to the management device 20.

The communication unit 21 of the management device 20 receives the installation-related information on the main duct 3 and the installation-related information on the cable 1 transmitted from the terminal 10. Then, the communication unit 21 stores, for example, the installation-related information on the cable 1, the installation-related information on the main duct 3, the date of receipt of these two pieces of installation-related information, identification information of the terminal 10, and the like in the storage unit 22 in association with each other. In this way, since the information related to the installation of the cable 1 is integrated and stored after the installation is completed, it becomes possible to present useful information to the worker when performing maintenance and management, and the like.

The present disclosure has been described above based on the specific embodiment. However, the present invention is not limited to these exemplifications, but is indicated by the scope of claims, and is intended to include all modifications within a scope and meaning equivalent to the scope of claims.

### REFERENCE SIGNS LIST

1: cable
2: sub-duct
3: main duct
3A: first end
3B: second end
4: protective tube
5: connector
10: terminal (acquisition Unit)
11: cable core
12: sheath
13: optical fiber
14: tape
16: optical fiber ribbon
20: management device
21: communication unit
22: storage unit
23: calculation unit
31: code
31A: first code
31B: second code
40: external network
41: wireless base station
51: ferrule
100: information management system

## Claims

1. An information management system configured to calculate a length of a duct in which a cable is to be installed, comprising:
an acquisition circuitry configured to acquire first position information after the duct is installed; and
a calculator configured to calculate the length of the installed duct based on the first position information,
wherein a first code is attached to a first end in a longitudinal direction of the duct, and
wherein the first position information indicates a position of the first end, and the first code stores the first position information.

2. The information management system according to claim 1,
wherein a second code is attached to a second end, the second end is an end opposite to the first end in the longitudinal direction of the duct,
wherein second position information indicates a position of the second end, and the second code stores the second position information,
wherein the acquisition circuitry acquires the first position information and the second position information after the duct is installed, and
wherein the calculator calculates the length of the installed duct based on the first position information and the second position information.

3. The information management system according to claim 1,
wherein the calculator further calculates a recommended length of the cable to be installed inside the duct based on the calculated length of the duct.

4. The information management system according to claim 1,
wherein a connector is attached to an end portion of the cable to be installed in the duct before the cable is installed in the duct.

5. The information management system according to claim 1,
wherein the first code further stores diameter information indicating a diameter of the duct, and
wherein the calculator further calculates a recommended diameter of the cable to be installed inside the duct based on the diameter information.

6. An information management method for calculating a length of a duct in which a cable is to be installed, the information management method comprising:
attaching a first code to a first end in a longitudinal direction of the duct, the first code storing first position information indicating a position of the first end;
acquiring the first position information after the duct is installed; and
calculating the length of the installed duct based on the first position information.
